# EUROPÄISCHE PATENTSCHRIFT

(11) **EP 2 707 198 B1**
(45) Veröffentlichungstag und Bekanntmachung des Hinweises auf die Patenterteilung: **03.06.2015**
(21) Anmeldenummer: 12714636.3
(22) Anmeldetag: 03.04.2012
(51) Int. Cl.: B29C 67/00, B01F 5/00

(54) **MEHRFARBIGER FUSED DEPOSITION MODELING DRUCK**
MULTICOLOURED FUSED DEPOSITION MODELLING PRINT
IMPRESSION MULTICOLORE PAR PROTOTYPAGE RAPIDE PAR DÉPÔT DE FIL

(30) Priorität: 10.05.2011 DE 102011075540
(43) Veröffentlichungstag der Anmeldung: 19.03.2014
(73) Patentinhaber: Evonik Röhm GmbH, 64293 Darmstadt (DE)
(72) Erfinder: PRIDÖHL, Markus, 63538 Großkrotzenburg (DE); SCHMITT, Günter, 64291 Darmstadt (DE); POPPE, Dirk, 60599 Frankfurt am Main (DE); KOHLSTRUK, Stephan, 48249 Dülmen (DE); HAMMANN, Benjamin, 60385Frankfurt (DE); CREMER, Sonja, 63834 Sulzbach (DE); BEKS, Kris, 3740 Rosmeer (BE); DEWAELHEYNS, Ludo, B-3690 Zutendaal (BE)
(86) Internationale Anmeldenummer: PCT/EP2012/056009
(87) Internationale Veröffentlichungsnummer: WO 2012/152510

(56) Entgegenhaltungen:
- US-A- 6 129 872
- US-A1- 2010 327 479
- US-A1- 2011 076 495

## Beschreibung

### Gebiet der Erfindung

Die Erfindung betrifft eine Fused Deposition Modeling-Vorrichtung ein Fused Deposition Modeling-Verfahren zur Herstellung mehrfarbiger dreidimensionaler Objekte. Insbesondere betrifft die Erfindung ein 3D-Druckverfahren mit dem gegenüber dem Stand der Technik 3D-Objekte mit besonders gutem Farbbild hergestellt werden können. Das erfindungsgemäße Verfahren basiert darauf, dass der zur Herstellung des eigentlichen Objekts verwendete Polymerstrang oder die daraus resultierende Schmelze oberflächlich in der Düse eingefärbt oder mit Additiven beschichtet wird.

### Stand der Technik

Rapid-Prototyping bzw. Räpid-Manufacturing-Verfahren sind Fertigungsverfahren, die das Ziel haben, vorhandene dreidimensionale CAD-Daten möglichst ohne manuelle Umwege oder Formen direkt und schnell in Werkstücke umzusetzen.

Unter den Rapid-Prototyping-Verfahren gibt es inzwischen diverse Verfahren diese lassen sich in zwei Gruppen unterteilen: Laserbasierte und Verfahren ohne Verwendung eines Lasers.

Das bekannteste laserbasierte und gleichzeitig älteste 3D-Druckverfahren ist die Stereolithographie (SLA) Hierbei wird eine flüssige Zusammensetzung eines strahlenhärtbaren Polymers mit einem Laser schichtweise ausgehärtet. Dem Fachmann ist klar ersichtlich, dass ein auf diese Weise produziertes Werkstück nur nachträglich an der Oberfläche koloriert werden kann. Dies ist aufwendig und zeitintensiv.

Ähnlich ist das Selective Laser Sintering Verfahren (SLS), bei dem ein pulverförmiger Rohstoff, wie z.B. ein Thermoplast oder ein sinterfähiges Metall, mittels eines Lasers analog zum SLA Schicht für Schicht selektiv gesintert wird. Auch mit diesem Verfahren kann man im ersten Verfahrensschritt nur einfarbige oder unspezifisch gefärbte 3D-Objekte erhalten. Das gleiche gilt für das dritte laserbasierte Verfahren "Laminated Object Manufacturing", bei dem eine mit Klebstoff versehene Papierbahn oder Kunststoffolie Schicht für Schicht aufeinander verklebt und mittels Laser geschnitten wird. Das nachträgliche Färben eines Objekts ist zum Beispiel in US 6,713,125 beschrieben.

Ein bekanntes 3D-Druckverfahren, das auch zur Herstellung mehrfarbiger Objekte verwendet werden kann, ist das UV-Inkjet-Verfahren. Bei diesem dreistufigen Verfahren wird ein pulverförmiges Material in dünnen Schichten aufgetragen, auf diese wird eine UV-härtbare Flüssigkeit in Form der jeweiligen Schicht des späteren dreidimensionalen Produktes gedruckt und schließlich wird die bedruckte Schicht mit einer UV-Quelle ausgehärtet. Diese Verfahrensschritte werden Schicht für Schicht wiederholt.

In EP 1 475 220 werden verschieden gefärbte Flüssigkeiten mit Härter bereitgehalten und in WO 2008/077850 zusätzlich in einer Kammer direkt vor dem Drucken vermischt. So ist eine selektive Färbung möglich. Durch die Mischkammer sind jedoch keine scharfen Farbübergänge möglich. Ferner ist ein solches Verfahren an den Grenzen der Aushärtung unscharf, was zu einer weniger glatten Oberfläche und unter Umständen zu einer ungleichmäßigen Färbung führen kann. In WO 01/26023 werden zwei Druckköpfe mit verschiedenfarbigen Härferzusammensetzungen, die zu Objektteilen mit unterschiedlichen Elastizitätseigenschaften führen beschrieben. Mehr als zwei Farben sind jedoch nicht beschrieben.

Eine Variante, bei der anstatt mit UV-Licht mit einer Wärmestrahlung ausgehärtet wird und gleichfalls verschiedenfarbige Härterzusammensetzungen verwendet werden, ist in WO 2008/075450 beschrieben.

In GB 2419679 ist ein Verfahren offenbart, bei dem verschieden gefärbte Polymerteilchen selektiv aufgetragen und bei verschiedenen Wellenlängen ausgehärtet werden können. Dieses Verfahren ist äußerst aufwendig und führt gleichzeitig zu einem unscharfen Farbbild.

In einem dem Inkjet-3D-Druck ähnlichen Verfahren nach der WO 2009/139395 wird eine farbige Flüssigkeit schichtweise aufgetragen und slektiv mit einer zweiten Flüssigkeit, die zu einer Härtreeaktion mit der ersten Flüssigkeit führt, bedruckt. Ein solches Verfahren kann Farben nur schichtweise aufbauen, davon abgesehen, dass es zwischen den nicht gehärteten Flüssigkeitsschichten zu Vermischungen kommen kann.

Ein weiteres Verfahren stellt das Three Dimension Printing (TDP) dar. Bei diesem Verfahren werden analog zu den Inkjet-Verfahren pulverförmige Materialien, bei denen es sich jedoch bevorzugt um Keramiken handelt, mit einer der Schmelze eines thermoplastischen Polymers Schicht für Schicht selektiv durchtränkt. Nach jeder Druckschicht muss eine neue Schicht des pulverförmigen Materials aufgebracht werden. Beim Erstarren des Thermoplasten wird das dreidimensionale Objekt gebildet.

Bei dem in US 2004/0251574 beschriebenen Verfahren wird anschließend an den Druck des Thermoplasten selektiv mit einer Farbe gedruckt. Vorteil dieses Verfahrens ist, dass sehr selektiv gedruckt werden kann. Nachteil dieses Verfahrens jedoch ist, dass kein gleichmäßiges und leuchtendes Farbbild erreicht werden kann, da ein gleichmäßiges Eindringen der Farbe in den Composit aus dem (Keramik)Pulver und dem Bindemittel nicht erreicht werden kann.

Bei dem in EP 1 491 322 beschriebenen Verfahren werden zwei unterschiedliche Materialien gedruckt. Das erste enthält das Bindemittel und eine Farbe, die bei Kontakt mit dem zweiten Material ausgefällt wird und damit selektiv die Oberfläche einfärbt. Auf diese Weise können besseren Farbeigenschaften an der Objektoberfläche erzeugt werden. Probleme stellen jedoch die gleichmäßige Vermischung der beiden Materialen und der aufwendige zweistufige Prozess dar. Wie und ob ein gutes Farbbild bei einem Mehrfarbdruck gewährleislet werden kann, ist nicht beschrieben.

In US 6,401,002 werden verschiedene Flüssigkeiten mit unterschiedlichen Farben und dem Bindemittel verwendet. Diese Flüssigkeiten werden entweder getrennt aufgetropft oder über Leitungen in einer Düse vor dem Auftropfen zusammengeführt. Der Fachmann weiß, dass beide Vorgehen zu nicht optimalen Farbbildern führen. Bei ersterem findet die Mischung der Farben in viskosen Flüssigkeiten auf der Oberfläche statt. Diese Mischung erfolgt so nur selten vollständig. Beim zweiten Vorgehen können Druckunterschiede in den Leitungen zu sehr starken Farbschwankungen führen.

Das bezüglich der Herstellung von dreidimensionalen Objekten mittels eines Druckverfahrens materialsparenste und auch in Bezug auf die maschinelle Ausgestaltung günstigste Verfahren ist das Fused Deposition Modeling (FDM). Dies verfahren wird mit kleinen Abwandlungen auch Selective Deposition Modeling (SDM) genannt.

Bei der FDM-Methode werden zwei unterschiedliche Polymerfäden in einer Düse aufgeschmolzen und selektiv gedruckt. Bei dem einen Material handelt es sich um ein Support-Material, das nur an Stellen benötigt wird, über denen später z.B. ein überhängender Teil des 3D-Objektes, der während des Druckvorgangs gestützt werden muss, gedruckt wird. Dieses Support-Material kann später, z.B. durch Lösen in Säuren, Basen oder Wasser entfernt werden Das andere Material (das Build-Material) formt das eigentliche 3D-Objekt. Auch hier erfolgt der Druck in der Regel schichtweise. Zum ersten Mal wurde das FDM-Verfahren in US 5,121,329 beschrieben. Das Färben allgemein wird in US 2000/20111707 erwähnt, nicht jedoch näher ausgeführt.

Bei dem in EP 1 558 440 beschriebenen Verfahren werden die einzelnen Schichten in einem anschließenden Verfahrensschritt farbig bedruckt. Dieses Verfahren ist langsam und führt bei dem bedrucken der bereits härtenden Thermoplasten zu schlecht aufgelösten Farbbildern.

Bei der farbigen 3D-Druck-Methode nach US 6,165,406 werden für jede einzelne Farbe getrennte Düsen verwendet. Mischfarben sind somit jedoch nur sehr eingeschränkt möglich und das Farbbild wird sehr einfach.

Bei der in US 7,648,664 beschriebenen Variante des FDM werden verschieden gefärbte Build-Materialien in Granulatform eingesetzt, getrennt voneinander aufgeschmolzen und je nach Farbe mittels eines zwischengeschalteten Extruders miteinander vermischt, bevor es verdruckt wird. Diese Methode ist apparativ sehr aufwendig und viele Vorteile des FDM gehen verloren.

In einem sehr ähnlichen System gemäß EP 1 432 566 erfolgt die Vermischung der geschmolzenen Granulate direkt im geheizten Druckkopf, bevor diese direkt verdruckt werden. Diese Mischung kann keinesfalls vollständig erfolgen und die Qualität des Druckbildes ist entsprechend schlecht. Weiterhin hat man auch hier den Nachteil, dass man Granulate oder Pulver benutzen muss und diese in der Maschine getrennt gelagert und geschmolzen werden müssen.

In US 6,129,872 ist ein Verfahren beschrieben, bei dem das Build-Material in einer Düse aufgeschmolzen wird und am Ende der Düse zu der Schmelze verschiedene Farbmischungen selektiv zudosiert werden. Dies führt jedoch zu keiner ausreichenden Durchmischung und zu einem unsauberen Farbbild.

### Aufgabe

Aufgabe war es, ein 3D-Druckverfahren zur Verfügung zu stellen, mit dem selektiv gefärbte, mehrfarbige dreidimensionale Objekte mit einem scharfen und klaren Farbbild hergestellt werden können.

Es war weiterhin Aufgabe, ein günstiges und schnell durchführbares 3D-Druckverfahren zum Druck mehrfarbiger Objekte zur Verfügung zu stellen.

Eine weitere Aufgabe war es, farbige Objekte darstellen zu können, wobei die Farbe nicht erst durch einen zusätzlichen Verarbeitungsschritt eingebracht werden soll.

Weitere nicht explizit genannte Aufgaben ergeben sich aus dem Gesamtzusammenhang der nachfolgenden Beschreibung, Ansprüche und Beispiele.

### Lösung

Unter dem Begriff Druckkopf wird im Rahmen dieser Erfindung die gesamte Vorrichtung zum Fördern, Schmelzen, Färben und Auftragen eines Filaments in einem FDM-3D-Druckverfahren verstanden.

Unter dem Begriff Zusammensetzung wird im Rahmen dieser Erfindung die Zusammensetzung verstanden, die erfindungsgemäß auf den Polymerstrang aufgetragen wird. Die Zusammensetzung enthält Farben, Pigmente und/ oder Additive.

Unter dem Begriff Filament wird im Rahmen der vorliegenden Erfindung die Rohform der Build- bzw. Supportmaterialien in Form eines Stranges verstanden. Dieses Filament wird in dem Druckkopf erfindungsgemäß aufgeschmolzen und danach zu einem 3D-Objekt verdruckt. Bei dem Filament handelt es sich um ein thermoplastisch verarbeitbares Material. In der Regel ist das Filament ein Polymerfilament, jedoch auf solche nicht eingeschränkt. Auch können Polymerfilamente beispielsweise nur teilweise aus einem thermoplastisch polymeren Matrixmaterial und weiteren Füllstoffen oder z.B. Metallen zusammengesetzt sein.

Gelöst wurden die Aufgaben durch eine Vorrichtung nach Anspruch 1 und ein Verfahren nach Anspruch 4. Die erfindungsgemäße Vorrichtung ist dadurch gekennzeichnet, dass dem zweiten Druckkopf Additive und/oder Farben aus mehreren Vorratsbehältern, ausgestattet mit Dosiervorrichtungen, beschichtet wird: Die

Beschichtung erfolgt an dem noch festen Filament vor dem Schmelzen im oberen Bereich der Düse.

Auf diese Weise erhält man ein nur oberflächlich gefärbtes Build-Material. Dadurch ist es gegenüber einer in Gänze gefärbten Polymermatrix ein materialsparendes Verfahren. Weiterhin werden Additive, wie insbesondere Haftvermittler, auf diese Weise genau dort aufgebracht, wo sie zur Steigerung der Stabilität des 3D-Objekts benötigt werden.

In einer optionalen Ausführungsform befindet sich vor der Zuleitungsstelle für die Zusammensetzung an der Außenseite des Druckkopfes eine Mischvorrichtung, insbesondere handelt es sich dabei um einen dynamischen Mischer. Diesem dynamischen Mischer werden verschiedene Additive und/oder Farben zunächst zugeführt. Die im dynamischen Mischer erzeugte Mischung wird darauf in den Druckkopf weitergeleitet.

Diese Ausführungsform kann in zwei unterschiedlichen Varianten vorliegen. In einer ersten ist der dynamische Mischer derart an der Düse angebracht, dass die Mischung in die Polymerschmelze im unteren Bereich der Düse geleitet wird.

In einer zweiten Variante ist der dynamische Mischer am Druckkopf oberhalb der Düse angebracht, und die Mischung aus Farben und/oder Additiven wird auf die Oberfläche des festen Filaments aufgetragen. Eine Verteilung der Mischung kann dabei teilweise durch Diffusion in die Schmelze erfolgen. Eine homogene Verteilung in der Schmelze ist jedoch wie beschrieben nicht nötig, da die spätere Oberfläche des dreisimensionalen Objektes ausschließlich von der Oberfläche des Schmelzestrangs gebildet wird. Mit dieser Variante ist es somit insbesondere möglich, ein Verfahren zur Verfügung zu stellen, das mit einem geringeren Farbverbauch verwendet werden kann. Entsprechendes gilt auch für Additive, vor allem solche, die eine Haftungsverbesserung zwischen den einzelnen Schichten im dreidimensionalen Objekt bewirken sollen. Diese werden ausschließlich an der Oberfläche des Schmelzestrangs benötigt.

In einer weiteren Ausführungsform weist der Druckkopf zusätzlich zu dem dynamischen Mischer einen statischen Mischer im unteren Bereich der Düse auf.

Bei den in der Vorrichtung verwendeten Farben handelt es sich um Zusammensetzungen verschiedener Farben, wie z.B. um drei Primärfarben wie z.B. die subtraktive Mischung Magenta, Cyan und Blau bzw. Gelb oder die additive Mischung der Lichtfarben Rot, Grün und Blau. bei der Verwendung von drei Primärfarben kann bevorzugt zusätzlich Schwarz als vierte "Farbe" hinzukommen. Alternativ kann in Abhängigkeit des Build-Material auch weiß als vierte oder fünfte "Farbe" eingesetzt werden. Für true color Systeme können jedoch je nach System auch bis zu zwanzig Farben benötigt werden.

Die aufgeführten Farbsysteme unterschiedlicher Zusammensetzungen sind dem Fachmann bereits lange aus dem 2D-Druck bekannt. Alle verwendeten Farben liegen jeweils in getrennten Vorratsbehältern, jeweils ausgestattet mit einer eigenen Dosiervorrichtung, vor und werden von dort je nach Ausführungsform in die Düse oder den dynamischen Mischer dosiert.

Bei den Additiven handelt es sich bevorzugt um ein oder mehrere haftverbessernde Additive. Alternativ oder zusätzlich kann es sich auch um weitere Additive wie z.B. um UV-Vernetzer oder thermisch bzw. magnetisch aktivierbare Klebstoffe handeln. Weiterhin denkbar sind der Zusatz von Additiven zur Verbesserung der Haptik, Schmutz abweisende bzw. die Kratzfestigkeit verbessernde Beschichtungsbestandteile oder Additive zur Oberflächenstabilisierung, wie z.B. UV-Stabilisatoren. Für industrielle Anwendungen sind darüber hinaus Additive zur Verbesserung der Wärmeleitfähigkeit bzw. der elektrischen Leitfähigkeit oder Antistatika von Interesse.

Die Additive werden aus separaten Vorratsbehältern oder gemischt mit einer oder mehreren Farben vorgelegt. Das jeweilige Build-Material und/oder Support-Material wird mit diesen Additiven derart beschichtet, dass nach dem Aufschmelzen eine haftverbessernde Wirkung der Filamente untereinander erzielt wird.

In einer besonderen Ausführungsform weist die Vorrichtung zur Herstellung dreidimensionaler Körper einen dritten Druckkopf auf. Dieser optionale dritte Druckkopf ist genauso ausgestattet wie der zweite Druckkopf. Insbesondere wird mittels dieses dritten Druckkopfs ein Filament für ein zweites Build-Material verdruckt, welches sich von dem ersten Build-Material unterscheidet. Die Farbzusammensetzungen können optional auch Füllstoffe enthalten, die beim Druck dem transparenten Build-Material bei Bedarf eine nicht transparente Optik verleihen.

Zum Beispiel kann der zweite Druckkopf ein vor dem Färben ungefärbtes, nicht transparentes und der dritte Druckkopf ein vor dem Färben ungefärbtes, transparentes Build-Material enthalten. Bevorzugt verfügen beide Druckköpfe dabei jeweils über eigene Mischvorrichtungen, die auf dieselben Vorratsbehälter zugreifen.

Bevorzugt handelt es sich bei den Build-Materialien jeweils um thermoplastisches Material. Bevorzugt handelt es sich bei dem Build-Material aus dem zweiten und/oder dem dritten optionalen Druckkopf um Acrynitril-Butadien-Styrol-Terpolymer (ABS), Polycarbonat (PC), Poly(meth)acrylat, Polyphenylensulfon (PPSU), HDPE, Polyetherimid (PEI), Polyetheretherketon (PEEK), Polymilchsäure (PLA) oder eine Mischung aus mindestens zwei dieser Polymere oder eine Mischung, die mindestens zu 50 Gew% aus einem dieser genannten Polymere zusammengesetzt ist. Die Schreibweise (Meth)acrylat bedeutet hier sowohl Methacrylat, wie z.B. Methylmethacrylat, Ethylmethacrylat usw., als auch Acrylate, wie z.B. Ethylhexylacrylat, Ethylacrylat usw., sowie Mischungen aus beiden.

Bezüglich des zweiten, optionalen Build-Material aus der dritten Düse sind vor allem Polymethacrylat oder Polycarbonat bevorzugt.

Bezüglich des Support-Materials aus dem ersten Druckkopf sollte es sich bevorzugt um ein säure-, base-oder wasserlösliches Polymer handeln.

Die erfindungsgemäße Vorrichtung zur Verwendung in einem Fused Deposition Modeling (FDM)Verfahren entspricht im Allgemeinen dem Stand der Technik und ist damit in der Regel derart gestaltet, dass der jeweilige Farbton in ein rechnerbasiertes CAD-Programm eingegeben wird und dass dabei eine Datei bereitstellt, die zusätzlich zu den Koordinaten die Farbinformation zur Fertigung und zur Regelung der Material- und Farbeinstellung enthält. Dabei wird durch Regelung der Dosiervorrichtungen und gesteuerte Zudosierung der jeweiligen Primärfarben bzw. Schwarz aus den Vorratsbehältern der jeweilige Farbton eingestellt.

Optional können der zweite bzw. der dritte Druckkopf der Vorrichtung weitere Vorratsbehälter, die zusätzlich zu Schwarz und den Farben bzw. Primärfarben oder Additiven weitere Pigmente enthalten, aufweisen. Bei diesen weiteren Pigmenten kann es sich z.B. um Metallicpigmente und/oder fluoreszierende Pigmente handeln.

Wie bereits ausgeführt können die Vorratsbehälter auch Additive enthalten. Dabei enthalten die Zusammensetzungen durch Mikrowellen oder Magnetfelder erwärmbare Additive, Haftvermittler oder Klebstoffe. Diese können entweder einer oder allen Zusammensetzungen zugesetzt sein oder aus getrennten Vorratsbehältern zugesetzt werden. In letzterem Fall sind diese Zusammensetzungen farblos. Die konkrete Auswahl der entsprechende Additive ergibt sich dem Fachmann aus der Zusammensetzung und dem verwendeten Build-Material.

Darüber hinaus können ein oder mehrere Vorratsbehälter auch Vernetzer, Initiatoren oder Beschleuniger enthalten, die nach dem Kontakt mit dem Filament aus Druckkopf 2 und/oder 3 zu einer Vernetzung führen, so dass man ein ganz oder teilweise elastomeres oder duroplastisches dreidimensionales Objekt erhält. Bei dem Zusammentreffen dieser Additive mit dem Thermoplasten des Filaments erfolgt eine chemische Reaktion, die zur Aushärten der Matrix führt.

Eine oberflächliche Vernetzung kann auch nachträglich erfolgen, indem zunächst mittels Mikrowellen, Wärme, UV-Licht oder Magnetfelder aktivierbare Additive als Beschichtung aufgetragen werden und diese nachträglich in einem folgenden Verfahrensschritt entsprechend aktiviert werden. So kommt es zu einer besonders vorteilhaften Vernetzung an der Oberfläche der ehemaligen Filamente. Durch Diffusion kann diese nachträgliche Vernetzung jedoch auch innerhalb der ehemaligen Filamente erfolgen.

Alternativ können die Additive aus verschiedenen Vorratsbehältern nach dem Vermischen selbst miteinander reagieren und so z. B. zu einer chemischen Vernetzung an der Filamentoberfläche führen und/oder zu einer Haftverbesserung der Filamente nach dem Druck untereinander.

Üblicherweise handelt es sich bei den Vorratsbehältern um bewegliche Kartuschen, wie sie zum Farbdruck aus dem Stand der Technik für 2-D-Tintenstrahl-Farbdrucker bekannt sind. Diese können derart gestaltet sein, dass sie einfach und individuell ausgetauscht bzw. erneuert werden können.

Zu der Zeichnung:

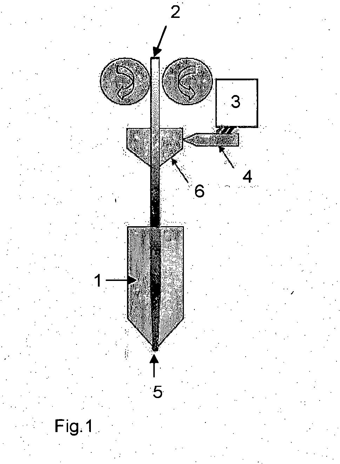

Fig.1 stellt exemplarisch eine Ausführungsform dar, bei der das nicht geschmolzene Filament oberflächlich beschichtet wird und die Farb- und/oder Additivzusammensetzung vorhergehend in einem dynamischen Mischer homogen vermischt wird. Folgende Indizes finden sich in der Zeichnung:
   1:Düse
   2:Filament
   3:Vorratsbehälter (hier exemplarisch nur einer dargestellt)
   4:dynamischer Mischer
   5:Schmelze des Build-Materials
   6: Beschichtungseinheit

## Patentansprüche

1. Vorrichtung zur Herstellung ein- oder mehrfarbiger, dreidimensionaler Objekte aus Filamenten, aufweisend einen ersten Druckkopf, mit dem ein Support-Material gedruckt wird, und einen zweiten Druckkopf, mit dem ein Build-Material gedruckt wird, dem das Build-Material in Form eines Filaments (2) zugefügt wird, wobei der zweite Druckkopf eine Düse (1), wiederum bestehend aus mindestens zwei Bereichen, aufweist, wobei In einem oberen Bereich der Düse das Polymer fest und in einem unteren geschmolzen (5) ist, **dadurch gekennzeichnet, dass** das noch feste Filament im oberen Bereich der Düse mit Additiven und/oder Farben aus mehreren Vorratsbehältern (3), ausgestattet mit Dosiervorrichtungen, beschichtet wird.

2. Vorrichtung gemäß Anspruch 1, **dadurch gekennzeichnet, dass** die Farben und/oder Additive vor dem Beschichten in einem dynamischen Mischer (4) miteinander derart gemischt werden, dass dem dynamischen Mischer verschiedene Additive und/oder Farben zugeführt werden und dass das noch feste Filament mit der darin erzeugten Mischung beschichtet wird.

3. Vorrichtung gemäß Anspruch 2, **dadurch gekennzeichnet, dass** der Druckkopf zusätzlich zu dem dynamischen Mischer (4) einen statischen Mischer im unteren Bereich der Düse aufweist.

4. Verfahren zur Herstellung ein- oder mehrfarbiger, dreidimensionaler Objekte aus Filamenten, **dadurch gekennzeichnet, dass** mit diesem Verfahren mittels einer Vorrichtung gemäß mindestens einem der Ansprüche 2 oder 3 ein Build-Material in Form eines Filaments (2) mit Farben und/oder Additiven beschichtet wird, und dass die Farben und/oder Additive vor dem Beschichten in einem dynamischen Mischer (4) miteinander derart gemischt werden, dass dem dynamischen Mischer verschiedene Additive und/oder Farben zugeführt werden und dass das noch feste Filament im oberen Bereich der Düse mit der erzeugten Mischung beschichtet wird.

5. Verfahren nach Anspruch 4, **dadurch gekennzeichnet, dass** es sich bei den Farben mindestens um drei Primärfarben und Schwarz enthalten, und dass diese jeweils in einem getrennten Vorratsbehälter (3), ausgestattet mit Dosienvorrichtung, vorgelegt sind.

6. Verfahren nach Anspruch 4, **dadurch gekennzeichnet, dass** es sich bei den Additiven um ein oder mehrere haftverbessernde Additive handelt, dass diese aus separaten Vorratsbehältern (3) oder gemischt mit einer oder mehreren Farben vorgelegt sind, und dass mit diesen das jeweilige Build-Material und/oder Support-Material derart beschichtet wird, dass nach dem Aufschmelzen eine haftverbessernde Wirkung der Filamente untereinander erzielt wird.

7. Verfahren nach mindestens einem der Ansprüche 4 bis 6, **dadurch gekennzeichnet, dass** die Vorrichtung zur Herstellung dreidimensionaler Körper einen dritten Druckkopf aufweist, der genauso ausgestattet Ist wie der zweite Druckkopf, und dass dieser dritte Druckkopf ein Filament für ein zweites Build-Material aufweist.

8. Verfahren nach Anspruch 7, **dadurch gekennzeichnet, dass** der zweite Druckkopf ein vor dem Färben ungefärbtes, nicht transparentes und der dritte Druckkopf ein vor dem Färben ungefärbtes, transparentes Build-Material enthält.

9. Verfahren nach Anspruch 7 oder 8, **dadurch gekennzeichnet, dass** beide Druckköpfe mit jeweils eigenen Mischvorrichtungen auf dieselben Farbvorratsbehälter zugreifen.

10. Verfahren nach Anspruch 9; **dadurch gekennzeichnet, dass** es sich bei dem Build-Material um ein thermoplastisches Material handelt

11. Verfahren nach Anspruch 10, **dadurch gekennzeichnet, dass** es sich bei dem Build-Material aus dem zweiten und/oder dem dritten optionalen Druckkopf um Acrynitril-Butadien-Styrol-Terpolymer (ABS), Polycarbonat (PC), Poly(meth)acrylat, Polyphenylensutfon (PPSU), HDPE, Polyetherimid (PEI), Polyetheretherketon (PEEK), Polymilchsäure (PLA) oder eine Mischung aus mindestens zwei dieser Polymere handelt.

12. Verfahren nach Anspruch 8, **dadurch gekennzeichnet, dass** es sich bei dem Build-Material aus der dritten Düse um ein Polymethacrylat oder Polycarbonat handelt.

13. Verfahren nach mindestens einem der Ansprüche 4 bis 12, **dadurch gekennzeichnet, dass** es sich bei dem Support-Material aus dem ersten Druckkopf um ein säure-, basen- oder wasserlösliches Polymer handelt.

14. Verfahren nach mindestens einem der Ansprüche 4 bis 13, **dadurch gekennzeichnet, dass** der jeweilige Farbton In ein rechnerbasiertes CAD-Programm eingegeben wird, dass dabei eine Datei bereitstellt, die zusätzlich zu den Koordinaten die Farbinformation zur Fertigung und zur Regelung der Material- und Farbeinstellung enthält und damit durch Regelung der Dosiervorrichtungen und gesteuerte Zudosierung der jeweiligen Primärfarben bzw. Schwarz aus den Vorratsbehältern der jeweilige Farbton eingestellt wird.

15. Verfahren nach mindestens einem der Ansprüche 4 bis 14, **dadurch gekennzeichnet, dass** es weitere Farbvorratsbehälter gibt, die zusätzlich zu Farben oder Additiven weitere Pigmente enthalten.

16. Verfahren nach Anspruch 15, **dadurch gekennzeichnet, dass** es sich bei mindestens einem dieser Pigmente um Metallicpigmente oder um fluoreszierende Pigmente handelt.

17. Verfahren nach Anspruch 15, **dadurch gekennzeichnet, dass** die Zusammensetzung Haftvermittler, Klebstoffe oder durch Mikrowellen, Wärme, UV-Licht oder Magnetfelder aktivierbare Additive enthält und optional farblos Ist.

## Claims

1. Apparatus for production of single- or multicolored, three-dimensional objects from filaments, having a first print head with which a support material is printed, and a second print head with which a build material is printed, to which the build material is added in the form of a filament (2), the second print head having a nozzle (1) again consisting of at least two regions, the polymer being solid in an upper region of the nozzle and molten (5) in a lower region, **characterized in that** the still-solid filament in the upper region of the nozzle is coated with additives and/or color inks from a plurality of reservoir vessels (3), equipped with metering apparatuses.

2. Apparatus according to Claim 1, **characterized in that** the color inks and/or additives before the coating operation are mixed with one another in a dynamic mixer (4), such that various additives and/or color inks are supplied to the direct mixer and the still-solid filament is coated with the mixture produced therein.

3. Apparatus according to Claim 2, **characterized in that** the print head has, in addition to the dynamic mixer (4), a static mixer in the lower region of the nozzle.

4. Process for producing single- or multicolored, three-dimensional objects from filaments, **characterized in that** this process, by means of an apparatus according to at least one of Claims 2 and 3, coats a build material in the form of a filament (2) with color inks and/or additives, and **in that** the color inks and/or additives before the coating operation are mixed with one another in a dynamic mixer (4) such that various additives and/or color inks are supplied to the dynamic mixer and the still-solid filament in the upper region of the nozzle is coated with the mixture produced.

5. Process according to Claim 4, **characterized in that** the color inks are at least three primary color inks and black, and **in that** these are each initially charged in a separate reservoir vessel (3) equipped with a metering apparatus.

6. Process according to Claim 4, **characterized in that** the additives are one or more adhesion-improving additives, these are initially charged from separate reservoir vessels (3) or in a mixture with one or more color inks, and these are used to coat the respective build material and/or support material such that an adhesion-promoting effect of the filaments with one another is achieved after the melting operation.

7. Process according to at least one of Claims 4 to 6, **characterized in that** the apparatus for producing three-dimensional bodies has a third print head which is equipped in exactly the same way as the second print head, and **in that** this third print head has a filament for a second build material.

8. Process according to Claim 7, **characterized in that** the second print head has a non-transparent build material uncolored prior to the coloring operation, and the third print head a transparent build material uncolored prior to the coloring operation.

9. Process according to Claim 7 or 8, **characterized in that** both print heads each with dedicated mixing apparatuses draw on the same color ink reservoir vessel.

10. Process according to Claim 9, **characterized in that** the build material is a thermoplastic material.

11. Process according to Claim 10, **characterized in that** the build material from the second and/or third optional print head comprises acrylonitrile-butadiene-styrene terpolymer (ABS), polycarbonate (PC), poly(meth)acrylate, polyphenylene sulfone (PPSU), HDPE, polyetherimide (PEI), polyetheretherketone (PEEK), polylactic acid (PLA) or a mixture of at least two of these polymers.

12. Process according to Claim 8, **characterized in that** the build material from the third nozzle is a polymethacrylate or polycarbonate.

13. Process according to at least one of Claims 4 to 12, **characterized in that** the support material from the first print head is an acid-, base- or water-soluble polymer.

14. Process according to at least one of Claims 4 to 13, **characterized in that** the respective hue is input into a computer-based CAD program that provides a file which, in addition to the coordinates, contains the color information for manufacture and for regulation of the material and color settings, and hence the respective hue is established by regulation of the metering apparatuses and controlled metering of the respective primary color inks and black from the reservoir vessels.

15. Process according to at least one of Claims 4 to 14, **characterized in that** there are further color ink reservoir vessels which, in addition to color inks or additives, contain further pigments.

16. Process according to Claim 15, **characterized in that** at least one of these pigments is a metallic pigment or a fluorescent pigment.

17. Process according to Claim 15, **characterized in that** the composition comprises adhesion promoters, adhesives, or additives activatable by microwaves, heat, UV light or magnetic fields, and is optionally colorless.

## Revendications

1. Dispositif pour la fabrication d'objets unicolores ou multicolores tridimensionnels à partir de filaments, présentant une première tête d'impression, avec laquelle on imprime un matériau de support, et une deuxième tête d'impression, avec laquelle on imprime un matériau de construction, à laquelle le matériau de construction est fourni sous la forme d'un filament (2), dans lequel la deuxième tête d'impression présente une buse (1), se composant de nouveau d'au moins deux régions, dans lequel le polymère est solide dans une région supérieure de la buse et est fondu dans une région inférieure (5), **caractérisé en ce que** le filament encore solide dans la région supérieure de la buse est revêtu avec des additifs et/ou des couleurs provenant de plusieurs réservoirs de stockage (3) équipés de dispositifs de dosage.

2. Dispositif selon la revendication 1, **caractérisé en ce que** les couleurs et/ou les additifs sont mélangés les uns avec les autres dans un mélangeur dynamique (4) avant le revêtement, de telle manière que différents additifs et/ou différentes couleurs soient fournis au mélangeur dynamique et que le filament encore solide soit revêtu avec le mélange produit dans celui-ci.

3. Dispositif selon la revendication 2, **caractérisé en ce que** la tête d'impression présente en plus du mélangeur dynamique (4) un mélangeur statique dans la région inférieure de la buse.

4. Procédé pour la fabrication d'objets unicolores ou multicolores tridimensionnels à partir de filaments, **caractérisé en ce qu'**avec ce procédé, au moyen d'un dispositif selon au moins une des revendications 2 ou 3, on revêt un matériau de construction sous la forme d'un filament (2) avec des couleurs et/ou des additifs, et **en ce que** l'on mélange les couleurs et/ou les additifs les uns/unes avec les autres dans un mélangeur dynamique (4) avant le revêtement, de telle manière que différents additifs et/ou différentes couleurs soient fournis au mélangeur dynamique et que le filament encore solide dans la région supérieure de la buse soit revêtu avec le mélange produit dans celui-ci.

5. Procédé selon la revendication 4, **caractérisé en ce que** les couleurs contiennent au moins trois couleurs primaires et le noir, et **en ce que** celles-ci sont préparées respectivement dans un réservoir de stockage séparé (3), équipé d'un dispositif de dosage.

6. Procédé selon la revendication 4, **caractérisé en ce que** les additifs sont un ou plusieurs additifs améliorant l'adhérence, **en ce que** ceux-ci sont préparés dans des réservoirs de stockage séparés (3) ou mélangés avec une ou plusieurs couleurs, et **en ce que** le matériau de construction et/ou le matériau de support respectif est revêtu avec ceux-ci, de telle manière qu'un effet améliorant l'adhérence des filaments entre eux soit obtenu après la fusion.

7. Procédé selon au moins une des revendications 4 à 6, **caractérisé en ce que** le dispositif pour la fabrication de corps tridimensionnels présente une troisième tête d'impression, qui est équipée exactement comme la deuxième tête d'impression, et **en ce que** cette troisième tête d'impression présente un filament pour un deuxième matériau de construction.

8. Procédé selon la revendication 7, **caractérisé en ce que** la deuxième tête d'impression contient un matériau de construction non transparent, non coloré avant la coloration, et la troisième tête d'impression contient un matériau de construction transparent, non coloré avant la coloration.

9. Procédé selon la revendication 7 ou 8, **caractérisé en ce que** les deux têtes d'impression accèdent chacune avec son propre dispositif de mélange aux mêmes réservoirs de stockage de couleurs.

10. Procédé selon la revendication 9, **caractérisé en ce que** le matériau de construction est un matériau thermoplastique.

11. Procédé selon la revendication 10, **caractérisé en ce que** le matériau de construction venant de la deuxième et/ou de la troisième tête d'impression en option est un terpolymère acrylonitrile-butadiène-styrène (ABS), un polycarbonate (PC), un poly(méth)acrylate, un polyphénylène sulfone (PPSU), le HDPE, un polyétherimide (PEI), le polyétheréthercétone (PEEK), l'acide polylactique (PLA) ou un mélange d'au moins deux de ces polymères.

12. Procédé selon la revendication 8, **caractérisé en ce que** le matériau de construction sortant de la troisième buse est un polyméthacrylate ou un polycarbonate.

13. Procédé selon au moins une des revendications 4 à 12, **caractérisé en ce que** le matériau de support venant de la première tête d'impression est un polymère soluble dans les acides, dans les bases ou dans l'eau.

14. Procédé selon au moins une des revendications 4 à 13, **caractérisé en ce que** l'on introduit la teinte respective dans un programme informatique CAD, en ce l'on prépare ainsi un fichier, qui contient en plus des coordonnées les informations de couleur pour la fabrication et la régulation du réglage des matériaux et des couleurs et on règle ainsi la teinte respective par régulation des dispositifs de dosage et par ajout dosé commandé des couleurs primaires respectives ou du noir à partir des réservoirs de stockage.

15. Procédé selon au moins une des revendications 4 à 14, **caractérisé en ce qu'**il se trouve d'autres réservoirs de stockage, qui contiennent d'autres pigments en plus des couleurs ou des additifs.

16. Procédé selon la revendication 15, **caractérisé en ce qu'**au moins un de ces pigments est un pigment métallique ou un pigment fluorescent.

17. Procédé selon la revendication 15, **caractérisé en ce que** la composition contient des agents adhésifs, des colles ou des additifs activables par des micro-ondes, la chaleur, une lumière UV ou des champs magnétiques, et est optionnellement incolore.
